# EUROPEAN PATENT APPLICATION

(11) **EP 4 706 436 A1**
(43) Date of publication of application: **11.03.2026**
(21) Application number: 24198626.4
(22) Date of filing: 05.09.2024
(51) Int. Cl.: A41G 5/02, C09J 105/00, C09J 199/00, C09J 11/06, A61K 8/73, C08H 99/00

(54) **SELF-ADHESIVE FALSE EYELASHES AND PREPARATION METHOD THEREOF**

(71) Applicant: Hu, Zhibing, Tianjin 300041 (CN); Li, Xiaonan, Jinan City 250000 (CN)
(72) Inventor: Hu, Zhibing, Tianjin 300041 (CN); Li, Xiaonan, Jinan City 250000 (CN)
(74) Representative: Lin Chien, Mon-Yin

(57) **Abstract**

The present application provides self-adhesive false eyelashes with self-adhesive natural glue. A gelatin-carrageenan-Pullulan composite formula is utilized to create a self-adhesive natural glue that exhibits optimal viscosity. Therefore, this formulation imparts a strong self-adhesive effect to false eyelashes while maintaining low allergenicity. Consequently, the resulting false eyelashes are particularly well-suited for individuals with sensitive skin. The self-adhesive natural glue, which is formulated using a gelatin-carrageenan-Pullulan system, possesses notable superiorities in terms of adhesive performance, compatibility, reusability, safety, rebound resilience, skin adhesion, and other aspects for the self-adhesive false eyelashes within the scope of the present application. This innovation offers users a more convenient, comfortable, safe, and environmentally friendly makeup experience.

## Description

### FIELD OF THE INVENTION

The present invention relates to the technical field of cosmetics and specifically relates to self-adhesive false eyelashes and a preparation method thereof.

### BACKGROUND OF THE INVENTION

In the beauty industry, false eyelashes are extensively utilized to enhance the allure of women's eyes, thereby elevating their overall demeanor and self-assurance. As a beauty product, false eyelashes can be attached to eyelids to highlight the brightness and depth of the eyes effectively. However, this process relies on a specific adhesive, namely false eyelash glue, to achieve a stable connection between the false eyelashes and the eyelids.

On an academic level, applying false eyelash glue involves a plurality of fields such as material science, ocular dermatology, and ophthalmology. Although existing false eyelash glue can achieve stable adhesion of the false eyelashes in most cases, its safety for long-term use still needs further research and verification. Especially for people with sensitive eyes or eye diseases, the use of these glues may bring greater risks. Reagents in the glue are likely to cause allergic reactions in skin, and the false eyelash glue cannot be reused.

Chemical ingredients in the false eyelash glue currently on the market, such as acrylic acid (acrylate) copolymers, propylene glycol, sodium dehydroacetate, laureth-20, hydroxyethyl cellulose, methylparaben, and Arabic gum, also have certain irritation and allergenicity while providing the glue the adhesion property, which may cause users to experience eye discomfort, redness, itching, etc., and even cause conjunctival damage. For example, Arabic gum allergy is an adverse physiological reaction caused by contact with Arabic gum, and its main symptoms include eye problems, such as itching, redness, stinging, and tearing of the eyes.

To address the aforementioned technical issues, the inventor introduces self-adhesive false eyelashes. These eyelashes can be reused multiple times, offering cost-efficiency and practicality. Furthermore, the self-adhesive natural glue used is innocuous, non-irritating, and less likely to cause allergic reactions in the human body.

### SUMMARY OF THE INVENTION

Aiming at above related technologies, the present invention aims to solve the technical problem that false eyelash glue currently on the market can achieve stable adhesion of false eyelashes in most cases, but chemical components in the glue, such as acrylic acid (acrylate) copolymers, propylene glycol, sodium dehydroacetate, laureth-20, hydroxyethyl cellulose, methylparaben, and Arabic gum, also have certain irritation and allergenicity while providing the glue the adhesion property, which may cause users to experience eye discomfort, redness, itching, etc., and even cause conjunctival damage. Especially for people with sensitive eyes or eye diseases, the use of these glues may bring greater risks.

To overcome the aforementioned challenges, the present invention offers self-adhesive false eyelashes that are designed for multiple uses, with reduced allergenicity, enhanced stability, strong adhesion to the skin, and are safe and environmentally friendly. These eyelashes consist of root parts and eyelash bodies, with self-adhesive natural glue disposed on the root parts. The composition of the self-adhesive natural glue comprises gelatin, carrageenan, and Pullulan.

The gelatin used in the present invention is food-grade gelatin, which is prepared by denaturing and degrading bones and collagen of skins of animals such as pigs, cattle, and sheep, so it cannot cause irritation or allergy to eye and eye skins. The chemical structure of the gelatin used in the present invention contains a plurality of amino acid residues that form a complex three-dimensional network structure through the interaction of hydrogen bonds, ionic bonds, and the like, and this three-dimensional network structure enables gelatin molecules to have strong interaction force, thereby endowing the gelatin with good adhesion. The gelatin can form a colloid when being heated and can form a gel again when being cooled to be below 35-40°C. The reversible process of colloidization and gelation enables gelatin to maintain stable adhesion in proper conditions. Therefore, the adhesion of the gelatin used in the present invention cannot be too thick to cause inconvenience in use, and cannot be too thin to lose the adhesion, and the gelatin is used as an ideal base material for colloid of the self-adhesive false eyelashes.

The carrageenan used in the present invention is food-grade carrageenan, which is a hydrophilic colloid extracted from dulse seaweeds such as eucheuma, gelidium amansii, and pelvetia silquosa, and cannot cause irritation or allergy to eye and eye skin. The chemical structure of the carrageenan used in the present invention is formed by alternately linking sulfated or non-sulfated galactose and 3,6-anhydrogalactose through α-1,3 glycosidic bonds and β-1,4 bonds. Due to the special molecular structure and intermolecular interaction of the carrageenan, its alternate melting point is wide, and it is stable in neutral and alkaline solutions, cannot be hydrolyzed even in a heating condition, and can still keep good gelling properties. Consequently, the incorporation of carrageenan into the self-adhesive natural glue matrix enhances its strength, elasticity, and stability.

The gelatin used in the present invention has a low gelling temperature and long gelling time, and the carrageenan has a high melting point and stability, so a complementary effect is achieved when the gelatin and carrageenan are mixed for use, that is, the gelatin provides gelling capacity and high transparency at low temperature, and the carrageenan provides high-temperature stability and high gelling capacity; and therefore, the alternate melting point of the self-adhesive natural glue according to the present invention is improved, the self-adhesive natural glue can keep viscosity at high temperature and can form a stable gel at low temperature, and the self-adhesive natural glue has a high viscosity, stability, and transparency and can well meet the attractive requirement of the self-adhesive eyelashes. Furthermore, the issue of carrageenan's inadequate water-retention properties and lack of elasticity when used singly, as well as the problem of gelatin's low gelation temperature and extended gelation duration when used independently, are effectively resolved.

The Pullulan used in the present invention is an exopolysaccharide produced by fermenting glucose serving as a raw material through aureobasidium pullulans. The chemical structure of the Pullulan used in the present invention is a straight-chain polysaccharide formed by polymerizing maltotriose repeating units which are linked through α-1,4 glycosidic bonds through α-1,6 glycosidic bonds, and the molecular conformation is still stable for a long time under 20-70°C at pH of 1-12. Pullulan has good water solubility and can form a stable solution in water. With this characteristic, the Pullulan can be rapidly dissolved and evenly dispersed in the self-adhesive natural gel when serving as a thickening agent, and thus the viscosity of the self-adhesive natural glue is effectively improved.

The Pullulan, the gelatin, and the carrageenan used in the present invention have good compatibility; the molecular chain segments of the Pullulan and the gelatin have certain flexibility and ductility and can be mutually interpenetrated to form physical crosslinking points, and therefore a stable elastic net-shaped structure is established by the Pullulan and the gelatin. The aqueous solution of Pullulan demonstrates a robust resistance to external conditions. Consequently, when combined with gelatin for application purposes, leveraging the inherent insensitivity of Pullulan can mitigate the gelatin's susceptibility to environmental fluctuations. This strategic utilization of Pullulan's properties enhances the stability of the resulting gelatin matrix.

Compared with the related technology, the self-adhesive natural glue according to the present application adopts a gelatin-carrageenan-Pullulan composite formula through which a self-adhesive natural glue tape has good viscosity, so that the self-adhesive false eyelashes have a self-adhesive effect and can be easily attached to human skin without additional glue, and the makeup process is simplified. The self-adhesive natural glue can be heated with body temperature to enhance the viscosity; and the false eyelashes can be repeatedly used without frequent replacement, so the makeup cost is remarkably saved. The self-adhesive natural glue prepared from the gelatin-carrageenan-Pullulan system is high in transparency, does not affect the natural appearance of the false eyelashes, and makes the effect more natural after the false eyelashes are worn. The raw materials employed are natural and food-grade, ensuring safety, environmental compatibility, non-toxicity, odorlessness, and low allergenicity. They are especially well-suited for individuals with sensitive skin. Therefore, the self-adhesive natural glue, prepared from the gelatin-carrageenan-Pullulan system, of the self-adhesive false eyelashes according to the present application has remarkable advantages in self-adhesive performance, compatibility, reusability, safety, rebound resilience, skin adhesion and the like, and provides more convenient, comfortable, safe and environment-friendly makeup experience for the users.

In an optional example, the raw materials of the self-adhesive natural glue further include a nutrition additive.

In an optional example, the nutrition additive is selected from one or more groups consisting of panthenol, vitamin E, vitamin H, jojoba oil, protein hydrolysate, and histone acid.

The repair effect of panthenol reduces the allergenicity of the self-adhesive natural gel, prolongs the early stage of growth of the eyelashes to promote the growth of eyelashes, and stimulates dermal papillae and outer root sheath cells to prevent the eyelash growth from entering the early stage. Vitamin E, functioning as a potent antioxidant, nourishes hair follicle tissues, facilitating eyelash growth and providing comprehensive care for the lashes. It aids in sustaining lash moisture, thereby reducing dryness and susceptibility to breakage. The vitamin H can promote the growth of the eyelashes and plays an important role in maintaining the overall health and glossiness of the eyelashes. The jojoba oil nourishes the eyelashes and eye skin and supplements the moisture of the eyelashes. The protein hydrolysate is a small molecular protein, which can permeate into a cortical layer to provide nutrients and moisture for the eyelashes. Histone acid is a basic composition unit of the protein, which participates in the healthy growth and maintenance of the eyelashes.

In an optional example, the raw materials of the self-adhesive natural glue also include trichogenic peptides.

In an optional example, the trichogenic peptide is selected from one or more groups consisting of biotin tripeptide-1, and octapeptide-2.

Biotin tripeptide-1 constitutes a tripeptide fusion of vitamin H with the Matrikine signaling peptide GHK. The biotin tripeptide-1 has the effects of increasing the synthesis of extracellular matrixes such as collagen IV and laminin 5, delaying the aging of hair follicles, and improving the structures of the hair follicles, is favorable for fixing hair in dermal hair follicles, activates the expression of tissue repair genes, is favorable for reconstructing and repairing the structures of the eye skin, promotes cell proliferation and differentiation, promotes the growth of primary eyelashes, and reduces injury. The octapeptide-2 is derived from human thymosin β-4, can stimulate hair follicle stem cells, promotes the growth, development, transfer, and division of the hair follicle stem cells, reduces the expression of extracellular matrix-degrading enzymes, improves the generation of collagen, elastin, and fibronectin, and reconstructs and repairs the dermal layer, thereby providing excellent environmental factors for the development of the hair follicles.

In an optional example, the raw materials of the self-adhesive natural glue also include plant essential oil.

In an optional example, the plant essential oil is selected from one or more groups consisting of rosemary essential oil, lavender essential oil, chamomile essential oil, lemon essential oil, rose essential oil, and abietinol.

Chamomile essential oil, with its gentle aroma and calming properties, effectively reduces sensitivity and irritation around the eye area, thereby promoting the health of the eyelash roots. Lemon essential oil, on the other hand, boasts a refreshing scent and is abundant in vitamin C and antioxidants, which contribute to the enhancement of eyelash elasticity and shine. The rose essential oil has a strong fragrance and is rich in antioxidants and vitamin C, which are beneficial to protecting the eyelashes and enhancing the elasticity and glossiness of the eyelashes.

In an optional example, based on 100% of the total weight of the raw materials of the self-adhesive natural glue, the self-adhesive natural glue includes 1%-10% (such as 1%, 2%, 3%, 4%, 5%, 6%, 7%, 8%, 9%, and 10%) by weight of gelatin, 1%-5% (such as 1%, 2%, 3%, 4%, and 5%) by weight of carrageenan, 5%-20% (such as 5%, 10%, 15%, and 20% ) by weight of Pullulan, and the balance of solvent.

In an optional example, based on 100% of the total weight of the raw materials of the self-adhesive natural glue, the self-adhesive natural glue includes 1%-10% (such as 1%, 2%, 3%, 4%, 5%, 6%, 7%, 8%, 9%, and 10%) by weight of gelatin, 1%-5% (such as 1%, 2%, 3%, 4%, and 5%) by weight of carrageenan, 5%-20% (such as 5%, 10%, 15%, and 20% ) by weight of Pullulan, 0.01%-3% (such as 0.01%, 0.05%, 0.1%, 1%, 2%, and 3%) by weight of nutrition additive, and the balance of solvent.

In an optional example, based on 100% of the total weight of the raw materials of the self-adhesive natural glue, the self-adhesive natural glue includes 1%-10% (such as 1%, 2%, 3%, 4%, 5%, 6%, 7%, 8%, 9%, and 10%) by weight of gelatin, 1%-5% (such as 1%, 2%, 3%, 4%, and 5%) by weight of carrageenan, 5%-20% (such as 5%, 10%, 15%, and 20% ) by weight of Pullulan, 0.01%-3% (such as 0.01%, 0.05%, 0.1%, 1%, 2%, and 3%) by weight of nutrition additive, 0.01%-0.1% (such as 0.01%, 0.05%, and 0.1%) by weight of trichogenic peptide, and the balance of solvent.

In an optional example, based on 100% of the total weight of the raw materials of the self-adhesive natural glue, the self-adhesive natural glue includes 1%-10% (such as 1%, 2%, 3%, 4%, 5%, 6%, 7%, 8%, 9%, and 10%) by weight of gelatin, 1%-5% (such as 1%, 2%, 3%, 4%, and 5%) by weight of carrageenan, 5%-20% (such as 5%, 10%, 15%, and 20% ) by weight of Pullulan, 0.01%-3% (such as 0.01%, 0.05%, 0.1%, 1%, 2%, and 3%) by weight of nutrition additive, 0.01%-0.1% (such as 0.01%, 0.05%, and 0.1%) by weight of trichogenic peptide, 0.01%-0.1% (such as 0.01%, 0.05%, and 0.1%) by weight of plant essential oil, and the balance of solvent.

In an optional example, the weight ratio of the gelatin to the carrageenan to the Pullulan is (1-5):(1-5):5, preferably (1-5): (1-3):5, and more preferably (1-5):3:5. In this proportion, the performance of the natural gel system can be further optimized, it avoids excessive gelatin content which may cause excessive adhesion and excessive pull on the skin when removing the self-adhesive false eyelashes and also avoids excessive carrageenan content which may weaken the elasticity of the self-adhesive natural glue. In this weight ratio, a soft and flexible glue film is formed and tightly attached to the skin surface. The natural gel film provides enough adhesion, ensures that the self-adhesive false eyelashes do not fall off or displace during use, can also resist interference from external factors (such as sweat and friction) to a certain extent, and keeps the attachment firmness. Even with multiple applications, the self-adhesive false eyelashes maintain an acceptable level of adhesion without a significant decline in performance.

In an optional example, the eyelash bodies are fiber eyelash bodies; or the eyelash bodies are mink-hair eyelash bodies.

To solve the above problem, the present invention provides a preparation method for self-adhesive false eyelashes, including:
Step A: uniformly mixing and dissolving a solvent and carrageenan, and heating to reach the first temperature to obtain product A;
Step B: adding gelatin to product A, uniformly mixing and dissolving, and maintaining the first temperature to obtain product B;
Step C: cooling product B to reach a second temperature to obtain product C;
Step D: adding other raw material components except Pullulan to product C, maintaining the second temperature, and homogenizing and stirring to obtain product D;
Step E: adding Pullulan to product D, maintaining the second temperature, and homogenizing and stirring to obtain product E;
Step F: cooling product E to reach room temperature, maintaining the room temperature for more than 1 h, and discharging to obtain self-adhesive natural glue; and
Step G: applying the self-adhesive natural glue on the root parts of the false eyelashes and solidifying to form the self-adhesive false eyelashes.

In an optional example, based on 100% of the total weight of the raw materials of the self-adhesive natural glue, the self-adhesive natural glue includes 1%-10% (such as 1%, 2%, 3%, 4%, 5%, 6%, 7%, 8%, 9%, and 10%) by weight of gelatin, 1%-5% (such as 1%, 2%, 3%, 4%, and 5%) by weight of carrageenan, 5%-20% (such as 5%, 10%, 15%, and 20% ) by weight of Pullulan, and the balance of water. The preparation method of the self-adhesive false eyelashes includes:
Step A: uniformly mixing and dissolving water and carrageenan, and heating to reach the first temperature to obtain product A;
Step B: adding gelatin to product A, uniformly mixing and dissolving, and maintaining the first temperature to obtain product B;
Step C: cooling product B to reach a second temperature to obtain product C;
Step D: adding pullulan to product C, maintaining the second temperature, and homogenizing and stirring for 3-8 min to obtain a product D; and
Step E: cooling product D to reach room temperature (20°C±5) for more than 1 hour and discharging to obtain self-adhesive natural glue; and
Step F: applying the self-adhesive natural glue on the root parts of the false eyelashes and solidifying to form the self-adhesive false eyelashes.

In an optional example, based on 100% of the total weight of the raw materials of the self-adhesive natural glue, the self-adhesive natural glue includes 1%-10% (such as 1%, 2%, 3%, 4%, 5%, 6%, 7%, 8%, 9%, and 10%) by weight of gelatin, 1%-5% (such as 1%, 2%, 3%, 4%, and 5%) by weight of carrageenan, 5%-20% (such as 5%, 10%, 15%, and 20% ) by weight of Pullulan, 0.01%-0.5% (such as 0.01%, 0.05%, 0.1%, and 0.5%) by weight of vitamin E, and the balance of water. The preparation method of the self-adhesive false eyelashes includes:
Step A: uniformly mixing and dissolving water and carrageenan, and heating to reach the first temperature to obtain product A;
Step B: adding gelatin to product A, uniformly mixing and dissolving, and maintaining the first temperature to obtain product B;
Step C: cooling product B to reach a second temperature to obtain product C;
Step D: adding vitamin E to product C, maintaining the second temperature, and homogenizing and stirring for 3-8 min to obtain product D;
Step E: adding pullulan to product D, maintaining the second temperature, and homogenizing and stirring for 3-8 min to obtain product E; and
Step F: cooling the product E to reach room temperature (20°C±5) for more than 1 hour and discharging to obtain self-adhesive natural glue; and
Step G: applying the self-adhesive natural glue on the root parts of the false eyelashes and solidifying to form the self-adhesive false eyelashes.

In an optional example, based on 100% of the total weight of the raw materials of the self-adhesive natural glue, the self-adhesive natural glue includes 1%-10% (such as 1%, 2%, 3%, 4%, 5%, 6%, 7%, 8%, 9%, and 10%) by weight of gelatin, 1%-5% (such as 1%, 2%, 3%, 4%, and 5%) by weight of carrageenan, 5%-20% (such as 5%, 10%, 15%, and 20% ) by weight of Pullulan, 0.01%-0.5% (such as 0.01%, 0.05%, 0.1%, and 0.5%) by weight of vitamin E, 0.01%-2% (such as 0.01%, 0.05%, 0.1%, 0.5%, 1%, and 2%) by weight of panthenol, and the balance of water. The preparation method of the self-adhesive false eyelashes includes:
Step A: uniformly mixing and dissolving water and carrageenan, and heating to reach the first temperature to obtain product A;
Step B: adding gelatin to product A, uniformly mixing and dissolving, and maintaining the first temperature to obtain product B;
Step C: cooling product B to reach a second temperature to obtain a product C;
Step D: adding vitamin E, and panthenol to product C, maintaining the second temperature, and homogenizing and stirring for 3-8 min to obtain product D;
Step E: adding pullulan to product D, maintaining the second temperature, and homogenizing and stirring for 3-8 min to obtain product E; and
Step F: cooling product E to reach room temperature (20°C±5) for more than 1 hour and discharging to obtain a finished product, to obtain self-adhesive natural glue; and
Step G: applying the self-adhesive natural glue on the root parts of the false eyelashes and solidifying to form the self-adhesive false eyelashes.

In an optional example, based on 100% of the total weight of the raw materials of the self-adhesive natural glue, the self-adhesive natural glue includes 1%-10% (such as 1%, 2%, 3%, 4%, 5%, 6%, 7%, 8%, 9%, and 10%) by weight of gelatin, 1%-5% (such as 1%, 2%, 3%, 4%, and 5%) by weight of carrageenan, 5%-20% (such as 5%, 10%, 15%, and 20% ) by weight of Pullulan, 0.01%-0.5% (such as 0.01%, 0.05%, 0.1%, and 0.5%) by weight of vitamin E, 0.01%-2% (such as 0.01%, 0.05%, 0.1%, 0.5%, 1%, and 2%) by weight of panthenol, 0.01%-0.1% (such as 0.01%, 0.05%, and 0.1%) by weight of biotin tripeptide-1, and the balance of water. The preparation method of the self-adhesive false eyelashes includes:
Step A: uniformly mixing and dissolving water and carrageenan, and heating to reach the first temperature to obtain product A;
Step B: adding gelatin to product A, uniformly mixing and dissolving, and maintaining the first temperature to obtain product B;
Step C: cooling product B to reach a second temperature to obtain a product C;
Step D: adding vitamin E, panthenol, and biotin tripeptide-1 to product C, maintaining the second temperature, and homogenizing and stirring for 3-8 min to obtain product D;
Step E: adding Pullulan to product D, maintaining the second temperature, and homogenizing and stirring for 3-8 min to obtain product E; and
Step F: cooling product E to reach room temperature (20°C±5) for more than 1 hour and discharging to obtain a finished product, to obtain self-adhesive natural glue; and
Step G: applying the self-adhesive natural glue on the root parts of the false eyelashes and solidifying to form the self-adhesive false eyelashes.

In an optional example, based on 100% of the total weight of the raw materials of the self-adhesive natural glue, the self-adhesive natural glue includes 1%-10% (such as 1%, 2%, 3%, 4%, 5%, 6%, 7%, 8%, 9%, and 10%) by weight of gelatin, 1%-5% (such as 1%, 2%, 3%, 4%, and 5%) by weight of carrageenan, 5%-20% (such as 5%, 10%, 15%, and 20% ) by weight of Pullulan, 0.01%-0.5% (such as 0.01%, 0.05%, 0.1%, and 0.5%) by weight of vitamin E, 0.01%-2% (such as 0.01%, 0.05%, 0.1%, 0.5%, 1%, and 2%) by weight of panthenol, 0.01%-0.1% (such as 0.01%, 0.05%, and 0.1%) by weight of biotin tripeptide-1, 0.01%-0.1% (such as 0.01%, 0.05%, and 0.1%) by weight of mixture of rosemary essential oil and lavender essential oil, and the balance of water. The preparation method of the self-adhesive false eyelashes includes:
Step A: uniformly mixing and dissolving water and carrageenan, and heating to reach the first temperature to obtain product A;
Step B: adding gelatin to product A, uniformly mixing and dissolving, and maintaining the first temperature to obtain product B;
Step C: cooling product B to reach a second temperature to obtain a product C;
Step D: adding vitamin E, panthenol, biotin tripeptide-1, rosemary essential oil, and lavender essential oil to product C, maintaining the second temperature, and homogenizing and stirring for 3-8 min to obtain product D;
Step E: adding Pullulan to product D, maintaining the second temperature, and homogenizing and stirring for 3-8 min to obtain product E; and
Step F: cooling product E to reach room temperature (20°C±5) for more than one hour and discharging to obtain a finished product.

In the examples of the present invention, at the first temperature, the carrageenan and the gelatin can be completely dissolved in water, the first temperature is preferably 75-90°C, and the first temperature is preferably 80°C. At the second temperature, the carrageenan-gelatin mixed solution can be kept in a liquid state, the Pullulan can be gradually dissolved or dispersed in the carrageenan-gelatin mixed solution, and the Pullulan is prevented from unnecessary degradation or denaturation at high temperatures. The second temperature is preferably 55-70°C, and the second temperature is more preferably 60°C.

The E product is poured into a culture dish or other proper containers, and the solution is naturally dried for more than 1 h (such as 1 h, 3 h, 6 h, or 12 h) at room temperature, thus forming the self-adhesive natural glue.

The self-adhesive false eyelashes provided by the present invention have the beneficial effects that:
(1) High transparency and natural appearance: The gelatin used in the present invention is in a range from transparent and colorless to transparent and light-yellow, and the transparency is high; when the gelatin is used as the base material of colloid of the self-adhesive false eyelashes, it can maintain the natural appearance of the eyelashes, and does not influence the attractive appearance.
(2) Fitting convenience: The eyelashes are provided with natural glue, so the user does not need to apply the glue; moreover, the natural glue can be directly fitted with the eyes without dropping in water, thus the wearing process of the false eyelashes is simplified, and the use convenience is improved.
(3) Low allergenicity: The raw materials in the present invention are all in food grade, which has the characteristics of low allergenicity and no irritation, and apply to various skin types, particularly suitable for sensitive skin.
(4) Excellent performance of composite formula: The composite formula of the gelatin, the carrageenan, and the Pullulan combines respective advantages, and improves the strength, elasticity, and stability of the base material of the colloid. The present invention addresses the limitations of carrageenan when used alone, which include its low water-holding capacity and lack of elasticity, as well as the drawbacks of gelatin used independently, such as its low gelling temperature and extended gelling time. Pullulan and gelatin are compounded to form the elastic net-shaped structure which enhances the stability of the colloid and the resistance to environmental change.
(5) Multi-care and growth promotion: Vitamin E is added to improve the care effect for the eyelashes, and is favorable to maintain the healthy state of the eyelashes. The allergenicity of the product is mitigated by the repairing effects of panthenol, thereby enhancing its safety profile. Biotin tripeptide-1 is incorporated to facilitate the growth of primary eyelashes, mitigate damage, and accomplish a dual purpose of care and enhancement of lash growth.
(6) Fragrance experience: The natural plant essential oil is used for regulating the fragrance so that the product has the fragrance, and a joyful use experience is provided for the user. And
(7) Long-time stability: After the composite formula of the gelatin, the carrageenan, and the Pullulan are adopted in the present application, it shows excellent performance in texture, adhesion, and stability. Pullulan is incorporated to augment the elasticity and mechanical robustness of the composite colloid, while simultaneously ensuring a harmonized balance in the adhesive properties between gelatin and carrageenan. After being placed in a dark place for 12 m, the self-adhesive natural glue is still soft and flexible and has good toughness and adhesion.

### BRIEF DESCRIPTION OF THE DRAWINGS

To describe the technical solutions in the embodiments of the present invention more clearly, the following briefly introduces the accompanying drawings required for describing the embodiments. The accompanying drawings in the following description show merely some embodiments of the present invention, and a person of ordinary skill in the art may still derive other drawings from these accompanying drawings without creative efforts. Wherein:
FIG. 1 shows a viscosity measurement result of self-adhesive natural glue prepared in Example 1;
FIG. 2 shows measurement results of self-adhesive natural glue prepared in Example 2 in storage environments at 40°C, 50°C, and 60°C;
FIG. 3 shows gel strength measurement results of self-adhesive natural glue prepared in Example 3 after cooling at 10°C, 15°C, and 20°C;
FIG. 4 shows gel strength measurement results of self-adhesive natural glue prepared in Example 4;

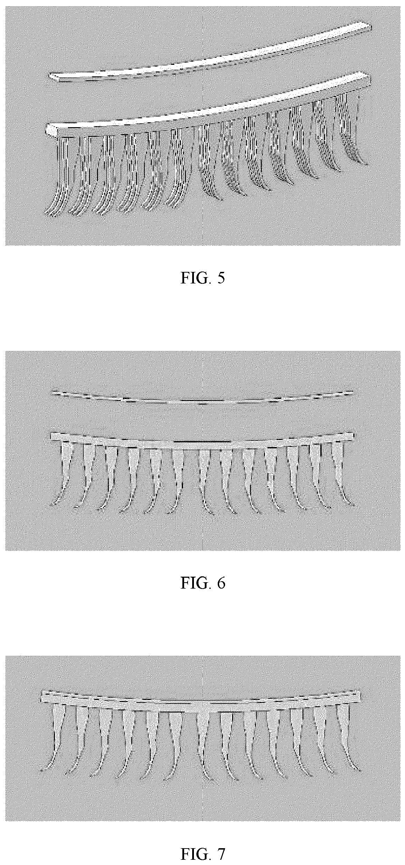

FIG. 5 is the first split structure schematic diagram of self-adhesive false eyelashes;
FIG. 6 is a second split structure schematic diagram of self-adhesive false eyelashes;
FIG. 7 is a first structure schematic diagram of self-adhesive false eyelashes with self-adhesive natural glue at root parts; and

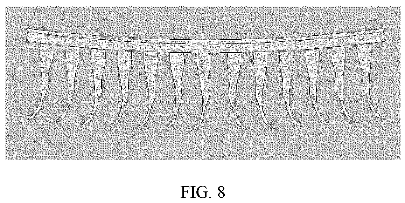

FIG. 8 illustrates a second schematic diagram of self-adhesive false eyelashes featuring self-adhesive natural glue at the root sections.

### DETAILED DESCRIPTION OF SOME EMBODIMENTS

The technical solutions in the embodiments of the present invention will be clearly and completely described as follows in combination with the drawings in the examples of the present invention, but obviously, the described examples are only a part of the embodiments of the present invention, rather than all the embodiments. Based on the examples of the present invention, all other examples obtained by a person skilled in the art without creative efforts shall fall within the protection scope of the present invention.

### Example 1

Gelatin with JIS viscosities of 20 mp, 30 mp, 40 mp, and 50 mp was selected. Based on 100% of the total weight of the raw materials of self-adhesive natural gel, the self-adhesive natural gel included 0, 5%, and 10% by weight of gelatin, 5% by weight of carrageenan, 5% by weight of Pullulan, and the balance of water.

A preparation method for self-adhesive false eyelashes included:
Step A: uniformly mixing and dissolving water and carrageenan, and heating to reach 80°C to obtain product A;
Step B: adding gelatin to product A, uniformly mixing and dissolving, and maintaining the temperature at 80°C to obtain product B;
Step C: cooling the product B to reach 60°C to obtain a product C;
Step D: adding Pullulan to product C, maintaining the temperature at 60°C, and homogenizing and stirring to obtain product D;
Step E: cooling product D to reach room temperature, maintaining the room temperature for 6 h, and discharging to obtain self-adhesive natural glue; and
Step F: applying the self-adhesive natural glue on the root parts of the false eyelashes and solidifying to form the self-adhesive false eyelashes.

### Test Example 1

The viscosity of the self-adhesive natural glue prepared in Example 1 was measured.

Test method: a lower end of an arranged pipette-type viscometer was pressed with fingers in a constant-temperature water tank to fill the self-adhesive natural glue prepared in Example 1; the internal temperature was regulated to reach 80°C; detection liquid flowed downwards; and then the time for the liquid level to pass through a marked line 1 and a marked line 2 was measured and then converted into viscosity (mp).

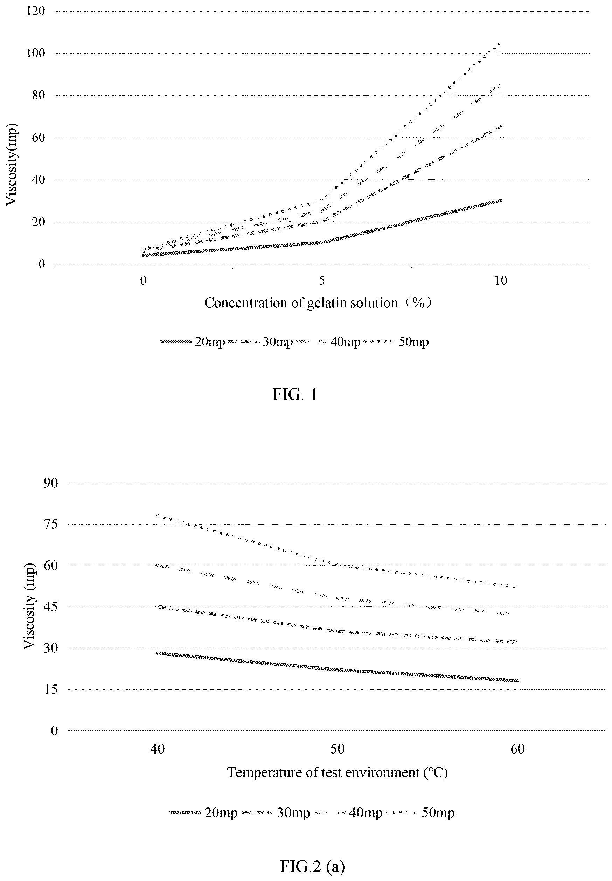

The test result indicated in FIG. 1 demonstrates that the viscosity of the self-adhesive natural glue experiences a significant rise with the escalation of gelatin concentration.

### Example 2

Gelatin with JIS viscosities of 20 mp, 30 mp, 40 mp, and 50 mp was selected. Based on 100% of the total weight of the raw materials of the self-adhesive natural gel, the self-adhesive natural gel included 3% by weight of gelatin, 3% by weight of carrageenan, 5% by weight of Pullulan, and the balance of water.

The subsequent steps are identical to those in Example 1, and hence will not be duplicated here

### Test Example 2

The self-adhesive natural glue prepared in Example 2 was placed in test environments at 40°C, 50°C, and 60°C respectively for viscosity measurement.

Test method: a lower end of an arranged pipette-type viscometer was pressed with fingers in a constant-temperature water tank to fill the self-adhesive natural glue prepared in Example 2; the internal temperature was regulated to reach 40°C, 50°C, and 60°C; detection liquid flowed downwards; and then the time for the liquid level to pass through a marked line 1 and a marked line 2 was measured and then converted into viscosity (mp).

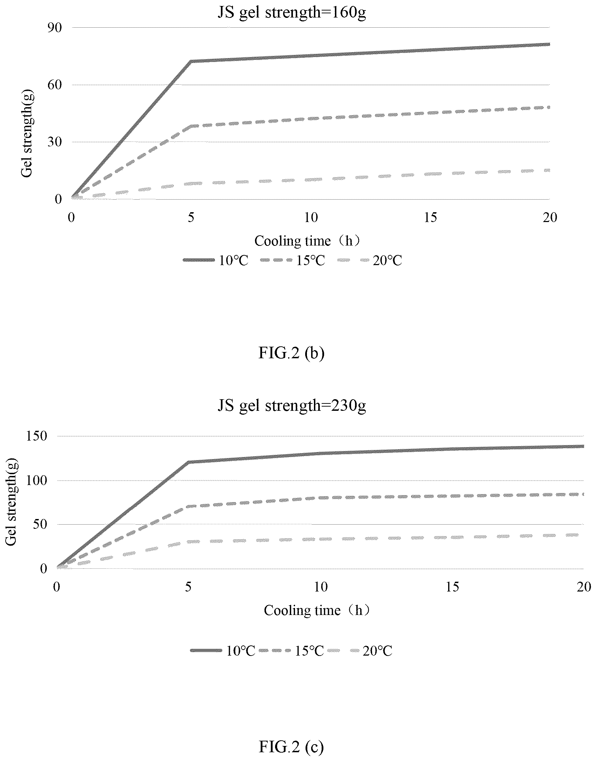

A test result depicted in FIG. 2 indicates that the viscosity experiences a marked increase as the temperature of the testing environment diminishes.

### Example 3

Gelatin with JS gel strengths of 160 g, 230 g, and 300 g was selected. Based on 100% of the total weight of the raw materials of the self-adhesive natural gel, the self-adhesive natural gel included 3% by weight of gelatin, 3% by weight of carrageenan, 5% by weight of Pullulan, and the balance of water.

A preparation method for self-adhesive false eyelashes included:
Step A: uniformly mixing and dissolving water and carrageenan, and heating to reach 80°C to obtain product A;
Step B: adding gelatin to product A, uniformly mixing and dissolving, and maintaining the temperature at 80°C to obtain product B;
Step C: cooling the product B to reach 60°C to obtain a product C;
Step D: adding Pullulan to product C, maintaining the temperature at 60°C, and homogenizing and stirring to obtain product D;
step E: cooling the product D at 10°C, 15°C, and 20°C, and discharging to obtain self-adhesive natural glue; and
Step F: applying the self-adhesive natural glue on the root parts of the false eyelashes and solidifying to form the self-adhesive false eyelashes.

### Test Example 3

The gel strength of the self-adhesive natural glue prepared in Example 3 was measured.

Test method: the self-adhesive natural glue prepared in Example 3 was placed on a test table; in an environment at a temperature not exceeding 25°C, a cylindrical probe with a smooth surface, a sharp edge, and a diameter being 12.7 mm was made to move downwards at a descending speed of 0.5-1.0 mm/s immediately to press the surface of the self-adhesive natural glue to be concaved downwards by 4 mm; and then the generated weight (g) was read, thus obtaining the gel strength (g).

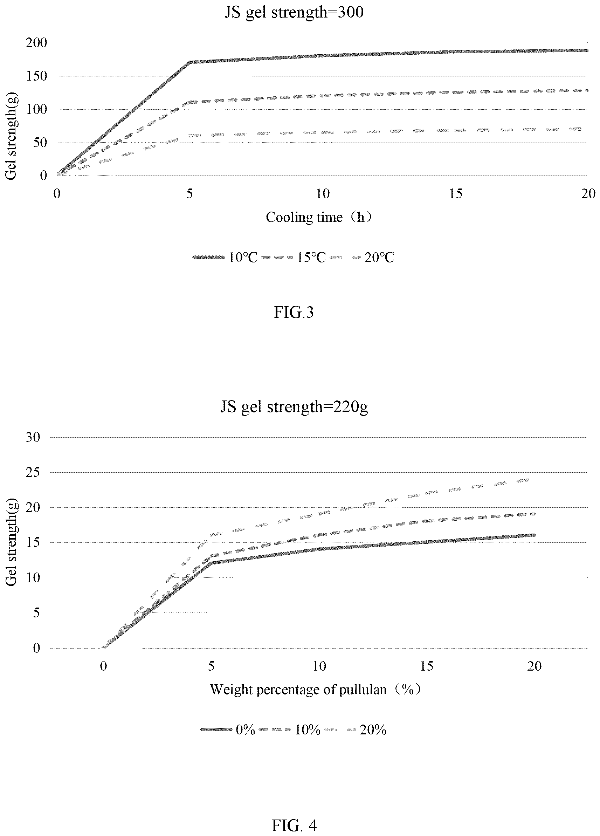

The test result presented in FIG. 3 reveals that at any cooling temperature, there is a rapid increase in gel strength within the first 1-5 hours following the initiation of cooling, after which the gel strength exhibits a gradual upward trend. Over time, the gel network within the self-adhesive natural glue matures, leading to a structure that becomes increasingly stable.

### Example 4

Gelatin with a JS gel strength of 220 g was selected. Based on 100% of the total weight of the raw materials of self-adhesive natural gel, the self-adhesive natural gel included 3% by weight of gelatin, 3% by weight of carrageenan, 0, 10%, and 20% by weight of Pullulan, and the balance of water.

The subsequent steps are identical to those in Example 1, and hence will not be duplicated here.

### Test Example 4

The gel strength of the self-adhesive natural glue prepared in Example 4 was measured.

Test method: the self-adhesive natural glue prepared in Example 4 was placed on a test table; in an environment at a temperature not exceeding 25°C, a cylindrical probe with a smooth surface, a sharp edge, and a diameter being 12.7 mm was made to move downwards at a descending speed of 0.5-1.0 mm/s immediately to press the surface of the self-adhesive natural glue to be concaved downwards by 4 mm; and then the generated weight (g) was read, thus obtaining the gel strength (g).

The test result in FIG. 4 shows that as the weight percentage of Pullulan in the raw materials is increased, the gel strength of the self-adhesive natural glue is increased.

### Example 5

Gelatin with a JIS viscosity of 20 mp was selected. Based on 100% of the total weight of the raw materials of the self-adhesive natural gel, the self-adhesive natural gel included 5% by weight of gelatin, 3% by weight of carrageenan, 5% by weight of Pullulan, and the balance of water.

A preparation method for self-adhesive false eyelashes included:
Step A: uniformly mixing and dissolving water and carrageenan, and heating to reach 80°C to obtain product A;
Step B: adding gelatin to product A, uniformly mixing and dissolving, and maintaining the temperature at 80°C to obtain product B;
Step C: cooling the product B to reach 60°C to obtain a product C;
Step D: adding Pullulan to product C, maintaining the temperature at 60°C, and homogenizing and stirring to obtain product D;
Step E: cooling product D to reach room temperature, maintaining the room temperature for 6 h, and discharging to obtain self-adhesive natural glue; and
Step F: applying the self-adhesive natural glue on the root parts of the false eyelashes and solidifying to form the self-adhesive false eyelashes.

### Example 6

Gelatin with a JIS viscosity of 20 mp was selected. Based on 100% of the total weight of the raw materials of the self-adhesive natural gel, the self-adhesive natural gel included 4% by weight of gelatin, 3% by weight of carrageenan, 5% by weight of Pullulan, and the balance of water.

The subsequent steps are identical to those in Example 5, and hence will not be duplicated here.

### Example 7

Gelatin with a JIS viscosity of 20 mp was selected. Based on 100% of the total weight of the raw materials of the self-adhesive natural gel, the self-adhesive natural gel included 3% by weight of gelatin, 3% by weight of carrageenan, 5% by weight of Pullulan, and the balance of water.

The subsequent steps are identical to those in Example 5, and hence will not be duplicated here.

### Example 8

Gelatin with a JIS viscosity of 20 mp was selected. Based on 100% of the total weight of the raw materials of the self-adhesive natural gel, the self-adhesive natural gel included 2% by weight of gelatin, 3% by weight of carrageenan, 5% by weight of Pullulan, and the balance of water.

The subsequent steps are identical to those in Example 5, and hence will not be duplicated here.

### Example 9

Gelatin with a JIS viscosity of 20 mp was selected. Based on 100% of the total weight of the raw materials of the self-adhesive natural gel, the self-adhesive natural gel included 1% by weight of gelatin, 3% by weight of carrageenan, 5% by weight of Pullulan, and the balance of water.

The subsequent steps are identical to those in Example 5, and hence will not be duplicated here.

### Contrast Example 1 (Carrageenan+Pullulan System)

Based on 100% of the total weight of the raw materials of self-adhesive natural gel, the self-adhesive natural gel included 3% by weight of carrageenan, 5% by weight of Pullulan, and the balance of water.

The difference between Contrast Example 1 and Example 9 is that: gelatin was not added to the raw materials in Contrast Example 1. The subsequent steps are identical to those in Example 9, and hence will not be duplicated here.

### Contrast Example 2 (Geltain+Pullulan System)

Gelatin with a JIS viscosity of 20 mp was selected. Based on 100% of the total weight of the raw materials of the self-adhesive natural gel, the self-adhesive natural gel included 1% by weight of gelatin, 5% by weight of Pullulan, and the balance of water.

The difference between Contrast Example 2 and Example 9 is that: carrageenan was not added to the raw materials in Contrast Example 2. The subsequent steps are identical to those in Example 9, and hence will not be duplicated here.

### Contrast Example 3 (Arabic gum+Carrageenan+Pullulan System)

based on 100% of the total weight of the raw materials of self-adhesive natural gel, the self-adhesive natural gel included 3% by weight of Arabic gum, 3% by weight of carrageenan, 5% by weight of Pullulan, and the balance of water.

The difference between Contrast Example 3 and Example 7 is that: the Arabic gum was added, and the gelatin was not added to the raw materials in Contrast Example 3. The subsequent steps are identical to those in Example 7, and hence will not be duplicated here.

### Contrast Example 4 (Carrageenan System)

Based on 100% of the total weight of the raw materials of self-adhesive natural gel, the self-adhesive natural gel included 3% by weight of carrageenan, and the balance of water.

The difference between Contrast Example 4 and Example 9 is that: the gelatin and Pullulan were not added to the raw materials in Contrast Example 4. The subsequent steps are identical to those in Example 9, and hence will not be duplicated here.

### Contrast Example 5 (Gelatin System)

Gelatin with a JIS viscosity of 20 mp was selected. Based on 100% of the total weight of the raw materials of self-adhesive natural gel, the self-adhesive natural gel included 1% by weight of gelatin, and the balance of water.

The difference between Contrast Example 5 and Example 9 is that: the carrageenan and the Pullulan were not added to the raw materials in Contrast Example 5. The subsequent steps are identical to those in Example 9, and hence will not be duplicated here.

### Contrast Example 6 (Gelatin+Carrageenan System)

Gelatin with a JIS viscosity of 20 mp was selected. Based on 100% of the total weight of the raw materials of the self-adhesive natural gel, the self-adhesive natural gel included 1% by weight of gelatin, 3% by weight of carrageenan, and the balance of water.

The difference between Contrast Example 6 and Example 9 is that: the Pullulan was not added to the raw materials in Contrast Example 6. The subsequent steps are identical to those in Example 9, and hence will not be duplicated here.

### Test Example 5

The self-adhesive natural glue prepared in Examples 5-9 and the self-adhesive natural glue prepared in Contrast Examples 1-5 were subjected to performance tests: including gel strength, adhesion, rebound resilience, deformation, and adhesion after continuous use 10 times, patch test, and product appearance and adhesion after placing in a dark place at room temperature for 12 m.

The test method included:
Gel strength: the prepared self-adhesive natural glue was placed on a test table; in an environment at a temperature not exceeding 25°C, a cylindrical probe with a smooth surface, a sharp edge, and a diameter being 12.7 mm was made to move downwards at a descending speed of 0.5-1.0 mm/s immediately to press the surface of the self-adhesive natural glue to be concaved downwards by 4 mm; and then the generated weight (g) was read, thus obtaining the gel strength (g).

Viscosity: a lower end of a pipette-type viscometer was pressed with fingers in a constant-temperature water tank to fill the prepared self-adhesive natural glue; the internal temperature was regulated to reach 40°C; detection liquid flowed downwards; and then the time for the liquid level to pass through a marked line 1 and a marked line 2 was measured and then converted into viscosity (mp).

Rebound resilience: the self-adhesive natural glue with a thickness of 12.5 mm was measured at 30°C according to DIN 53512 utilizing a rebound resilience tester, and the rebound resilience was defined as follows: Rt=(1-cosα)×100%, α representing the measured rebound resilience angle (°). The higher the rebound resilience (%) was, the better the rebound resilience was. The higher the percentage of the rebound resilience Rt was, the better the rebound resilience of the material after impact was, that is, the material could effectively recover energy and restore it to the original state.

Adhesion: the self-adhesive false eyelashes with the self-adhesive natural glue at the root parts were attached to a test base material; timing was started; and whether two sides separated from the surface of the test base material was observed. When the distance between end edges of the two sides and the surface of the test base material was more than or equal to 2 mm, it was defined as warping; the timing was stopped when warping occurred, and then the adhesion duration (T) was obtained; moreover, the transverse length (L2) of the warped part was measured; the warping rate was defined to be = the transverse length (L2) of the warped part after 16 h/the transverse length (L1) of the root parts; the higher the warping rate was, the poorer the adhesion was; 100% represented that the self-adhesive false eyelashes fallen off; and the longer the adhesion duration (T) was, the better the adhesion was.

In a patch test, 30 volunteers were selected as test objects to test the allergenicity of the prepared self-adhesive natural glue respectively (the tested samples were applied to the test objects in the same batch). 0.02 g of self-adhesive natural glue samples were taken and put into patch devices, and control holes were blank controls (no substance was put); the patch devices with the self-adhesive natural glue samples were pasted to the back of the test objects with low-allergenicity tapes, the test area was at least 5x5 cm, the test objects sat straight during pasting, and the pasting was conducted from bottom to top, the tape was slightly pressed with the palm to exhaust air and be tightly attached to the skin, and the process lasted for 24 h; 30 min and 48 h after the patch devices were removed, interpretation was conducted according to the following interpretation standards, and test results were counted. Interpretation standards: (-) represents negative reaction; (+ - ) represents suspected reaction: only mild erythema; (+) represents weakly positive: erythema, infiltration, and a small number of papules; (++) represents strongly positive: erythema, infiltration, papules, and blisters; and (+++) represents very strongly positive: erythema, infiltration, papules, blisters, and bullae.

Performance test results show that:
The gelatin-carrageenan-Pullulan system as demonstrated in Examples 5-9 exhibits a commendable synergistic effect. It has the capacity to generate a gel with excellent rebound resilience and water retention, which in turn forms a soft yet robust gel film adhering closely to the skin's surface. This film maintains its original shape and retains strong adhesion even after multiple uses, avoiding deformation. Additionally, the system achieves a negative rate of 100% in patch tests. After being placed in the dark place for 12 months at room temperature, the self-adhesive natural glue is still soft and flexible and is good in rebound resilience and adhesion.

In Contrast Example 9, the carrageenan and the Pullulan are independently added, so the rebound resilience and the adhesion are poorer than the Example 9. Although the Pullulan is added to improve the rebound resilience and the water-holding capacity of the carrageenan, after the self-adhesive natural glue is placed in a dark place for 12 months at room temperature, the adhesion is reduced, and the hardness is improved.

In Contrast Example 2, the gelatin and the Pullulan are independently added, so the prepared self-adhesive natural glue is softer than that prepared in Contrast Example 1, but gelation is started after cooling to reach a temperature below 20°C, and molding is stable after 16-18 h, and obvious deformation occurs after one use. In Contrast Example 2, after the self-adhesive natural glue is placed in the dark place for 12 months at room temperature, the adhesion is reduced, and the hardness is improved.

In Contrast Example 3, the Arabic gum and the Pullulan are independently added, so the prepared self-adhesive natural glue is semitransparent amber, low in transparency, and irritant to the skin; in the 30 subjects, the negative rate in the patch test is only 80%, and the rebound resilience and the adhesion are poorer than those of the Contrast Example 7. In Contrast Example 3, after the self-adhesive natural glue is placed in the dark place for 12 months at room temperature, the texture hardness is enhanced.

In Contrast Example 4, the carrageenan is independently added, so the rebound resilience and the adhesion are poorer than the Contrast Example 1. In Contrast Example 4, after the self-adhesive natural glue is placed in a dark place for 12 months at room temperature, the texture is seriously hardened because of water loss.

In Contrast Example 5, the gelatin is independently added, the texture is thinner than the Contrast Example 2, it is difficult to mold, and the rebound resilience is poor. In Contrast Example 5, after the self-adhesive false eyelashes are placed in the dark place for 12 months at room temperature, the texture is hardened because of water loss.

In Contrast Example 5, the gelatin and the carrageenan are independently added, and the texture has better elasticity, toughness, and softness than the Contrast Examples 4 and 5, but poorer than Examples 5-9. In Contrast Example 6, after the self-adhesive natural glue is placed in the dark place for 12 months at room temperature, because of water loss, the texture is hardened, and both the rebound resilience and the adhesion are reduced.

According to the present application, after the gelatin-carrageenan-Pullulan composite formula is adopted in Example 5-9, the texture, the adhesion, and the stability are all more excellent. The Pullulan is added to enhance the elasticity and the mechanical strength of the composite colloid and balance the viscosity of the gelatin and the carrageenan; and the long-term stability is superior to that of the composite of two colloids in Contrast Example 6.

According to the present application, the self-adhesive natural glue adopts the gelatin-carrageenan-Pullulan composite formula through which the self-adhesive natural glue has good viscosity, so that the self-adhesive false eyelashes have the self-adhesive effect, and low allergenicity, and are particularly suitable for people with sensitive skin. The prepared self-adhesive false eyelashes according to the present application have remarkable advantages in self-adhesive performance, compatibility, reusability, safety, rebound resilience, skin adhesion, and the like, and provide a more convenient, comfortable, safe, and environment-friendly makeup experience for the users.

The above description is only a preferred example of the present invention and does not limit the present invention in any form. Accordingly, any modifications, equivalent alterations, or adjustments made to the aforementioned example, in alignment with the technical principles of the present invention, without deviating from the technical solution of the present invention, shall still be encompassed within the scope of the technical solution proposed in the present invention.

## Claims

1. A self-adhesive false eyelashes, **characterized in that**, comprising a root parts on which a self-adhesive natural glue is arranged; and
a raw materials of the self-adhesive natural glue comprise gelatin, carrageenan and Pullulan.

2. The self-adhesive false eyelashes according to claim 1, **characterized in that**,
the raw materials of the self-adhesive natural glue further comprise a nutrition additive; and
preferably, the nutrition additive is selected from one or more groups consisting of panthenol, vitamin E, vitamin H, jojoba oil, protein hydrolysate, and histone acid.

3. The self-adhesive false eyelashes according to claim 1, **characterized in that**,
the raw materials of the self-adhesive natural glue also comprise trichogenic peptides; and
preferably, the trichogenic peptide is selected from one or more groups consisting of biotin tripeptide-1, and octapeptide-2.

4. The self-adhesive false eyelashes according to claim 1, **characterized in that**,
the raw materials of the self-adhesive natural glue also comprise plant essential oil; and
preferably, the plant essential oil is selected from one or more groups consisting of rosemary essential oil, lavender essential oil, chamomile essential oil, lemon essential oil, rose essential oil, and abietinol.

5. The self-adhesive false eyelashes according to claim 1, **characterized in that**, based on 100% of the total weight of the raw materials of the self-adhesive natural glue, the self-adhesive natural glue comprises 1%-10% by weight of gelatin, 1%-5% by weight of carrageenan, 5%-20% by weight of Pullulan, and the balance of solvent.

6. The self-adhesive false eyelashes according to claim 1, **characterized in that**, based on 100% of the total weight of the raw materials of the self-adhesive natural glue, the self-adhesive natural glue comprises 1%-10% by weight of gelatin, 1%-5% by weight of carrageenan, 5%-20% by weight of Pullulan, 0.01%-3% by weight of nutrition additive, and the balance of solvent.

7. The self-adhesive false eyelashes according to claim 1, **characterized in that**, based on 100% of the total weight of the raw materials of the self-adhesive natural glue, the self-adhesive natural glue comprises 1%-10% by weight of gelatin, 1%-5% by weight of carrageenan, 5%-20% by weight of Pullulan, 0.01%-3% by weight of nutrition additive, 0.01%-0.1% by weight of trichogenic peptide, and the balance of solvent.

8. The self-adhesive false eyelashes according to claim 1, **characterized in that**, based on 100% of the total weight of the raw materials of the self-adhesive natural glue, the self-adhesive natural glue comprises 1%-10% by weight of gelatin, 1%-5% by weight of carrageenan, 5%-20% by weight of Pullulan, 0.01%-3% by weight of nutrition additive, 0.01%-0.1% by weight of trichogenic peptide, 0.01%-0.1% by weight of plant essential oil, and the balance of solvent.

9. A preparation method of the self-adhesive false eyelashes according to any one of claims 1 to 8, comprising:
Step A: uniformly mixing and dissolving a solvent and carrageenan, and heating to reach the first temperature to obtain product A;
Step B: adding gelatin to product A, uniformly mixing and dissolving, and maintaining the first temperature to obtain product B;
Step C: cooling the product B to reach a second temperature to obtain a product C;
Step D: adding other raw material components except Pullulan to product C, maintaining the second temperature, and homogenizing and stirring to obtain product D;
Step E: adding Pullulan to product D, maintaining the second temperature, and homogenizing and stirring to obtain product E;
Step F: cooling product E to reach room temperature, maintaining the room temperature for more than 1 h, and discharging to obtain self-adhesive natural glue; and
Step G: applying the self-adhesive natural glue on root parts of the false eyelashes and solidifying to form the self-adhesive false eyelashes.

10. The preparation method of the self-adhesive false eyelashes according to claim 9, **characterized in that**, the first temperature is 75°C-90°C, and the second temperature is 55°C-70°C.
